# EUROPEAN PATENT SPECIFICATION

(11) **EP 2 723 067 B1**
(45) Date of publication and mention of the grant of the patent: **18.12.2019**
(21) Application number: 11867593.3
(22) Date of filing: 16.06.2011
(51) Int. Cl.: H04N 7/173, G06F 13/00, H04N 21/462, H04N 21/4722, H04N 21/433

(54) **INFORMATION-PROVIDING SYSTEM, RECEPTION DEVICE, AND INFORMATION MANAGEMENT SERVER**
INFORMATIONSBEREITSTELLUNGSSYSTEM, EMPFANGSVORRICHTUNG UND INFORMATIONSVERWALTUNGSSERVER
SYSTÈME DE FOURNITURE D'INFORMATIONS, DISPOSITIF DE RÉCEPTION ET SERVEUR DE GESTION D'INFORMATIONS

(43) Date of publication of application: 23.04.2014
(73) Proprietor: Mitsubishi Electric Corporation, Tokyo 100-8310 (JP)
(72) Inventor: HIDAI, Masashi, Tokyo 100-8310 (JP); AKIYAMA, Takumi, Tokyo 100-8310 (JP); MIURA, Shin, Tokyo 100-8310 (JP)
(74) Representative: Pfenning, Meinig & Partner mbB
(86) International application number: PCT/JP2011/003440
(87) International publication number: WO 2012/172610

(56) References cited:
- EP-A1- 1 631 070
- JP-A- 2001 144 704
- JP-A- 2008 294 943
- JP-A- 2009 105 912
- JP-A- 2010 233 020
- US-A1- 2004 133 919
- US-A1- 2008 148 319

## Description

### TECHNICAL FIELD

The present invention relates to an information providing system, a receiving apparatus and an information management server for providing pertinent information to video/audio information such as a commercial or program announcement contained in a video/audio stream provided via a broadcast or network, or in a video/audio stream provided via a medium like a DVD.

### BACKGROUND ART

A conventional information providing system is disclosed which acquires information introduced in a commercial in a broadcast or acquires pertinent information to program information about a program advertised in a program announcement, and which carries out, when acquiring the program information, a viewing/videotape setting (see Patent Document 1, for example) .

In the Patent Document 1, a user terminal that receives and plays a broadcast sends an information management server the video and acoustic information of a designated commercial or program announcement in a program a user selects . On the other hand, the information management server manages the video and acoustic information of commercials and program announcements that were broadcast, together with the pertinent information. Then the information management server carries out a matching search through the video and acoustic information sent from the user terminal and identifies the commercial or program announcement. Then it transmits to the user terminal the pertinent information to the identified commercial or program announcement.

In addition, when making an inquiry about the pertinent information while viewing a broadcast recorded on a hard disk recorder or the like, information about the date and time and channel of the original broadcast of the program is used. This makes it possible to be applied not only to a live broadcast but also to a recorded broadcast.

Incidentally, as for the pertinent information to the commercial and program announcement managed by the information management server, it is provided from a commercial provider and TV program producer, and is arranged.

Moreover, document US 2004/0133919 A1 describes a system for enabling a user to access complementary information related to one or a plurality of sequences or topics of interest in a recorded program previously broadcast on the radio or television and played back on a device, such as an audio or video tape or disk recorder/player.Document EP 1631070 A1 describes a system wherein information about each of broadcast programs is subdivided into multiple items including program attributes and the other program association schemes for management. When a recorded program is being played back, the recording/playback processing part also determines the current playback position of that recorded program being played back as playback time from the beginning thereof. Document US 2008/0148319 A1 discloses a method and a program product for coordinating web content with a time-shifted broadcast. Time perspective information for the time-shifted broadcast is acquired and web content coordinated with the time perspective of the time-shifted broadcast is provided to the viewer of the time-shifted broadcast.

### PRIOR ART DOCUMENT

### PATENT DOCUMENT

Patent Document 1: Japanese Patent Laid-Open No. 2010-233020.

### DISCLOSURE OF THE INVENTION

### PROBLEMS TO BE SOLVED BY THE INVENTION

The conventional information providing system disclosed in the Patent Document 1, however, notifies the information management server of the date and time of the broadcast of the whole program when making an inquiry about the pertinent information to the commercial or program announcement viewed at the playback. Accordingly, it has a problem of taking a long time for the information management server to search for the designated commercial or program announcement. In addition, it has a problem of taking a long time for the information management server to carry out the matching search using the video and acoustic information.

The present invention is implemented to solve the foregoing problems. Therefore it is an object of the present invention to provide an information providing system, a receiving apparatus and an information management server capable of reducing the matching search duration at the information management server when acquiring the pertinent information to the video/audio information of a commercial or program announcement viewed at the playback from the information management server.

### MEANS FOR SOLVING THE PROBLEMS

The invention is set out in the appended set of claims.

### ADVANTAGES OF THE INVENTION

According to the present invention, the configuration mentioned above can reduce the matching search duration at the information management server when acquiring the pertinent information to the video/audio information of a commercial or program announcement viewed at the playback from the information management server.

### BRIEF DESCRIPTION OF THE DRAWINGS

FIG. 1 is a diagram showing a configuration of an information providing system of an embodiment 1 in accordance with the present invention;
FIG. 2 is a block diagram showing a configuration of a broadcasting station of the embodiment 1 in accordance with the present invention;
FIG. 3 is a diagram showing an example of program sequence information in the embodiment 1 in accordance with the present invention;
FIG. 4 is a diagram showing an example of program frame scheduling information in the embodiment 1 in accordance with the present invention;
FIG. 5 is a block diagram showing a configuration of an information management server of the embodiment 1 in accordance with the present invention;
FIG. 6 is a block diagram showing a configuration of a recording-capable receiver of the embodiment 1 in accordance with the present invention;
FIG. 7 is a diagram showing an example of record program frame information in the embodiment 1 in accordance with the present invention;
FIG. 8 is a diagram showing an example of a playback history in the embodiment 1 in accordance with the present invention;
FIG. 9 is a flowchart showing the operation of the recording-capable receiver until it performs program recording in the information providing system of the embodiment 1 in accordance with the present invention; and
FIG. 10 is a flowchart showing the operation of the recording-capable receiver from making an inquiry about the pertinent information to acquiring it in the information providing system of the embodiment 1 in accordance with the present invention.

### BEST MODE FOR CARRYING OUT THE INVENTION

The best mode for carrying out the invention will now be described with reference to the accompanying drawings to explain the present invention in more detail.

### EMBODIMENT 1

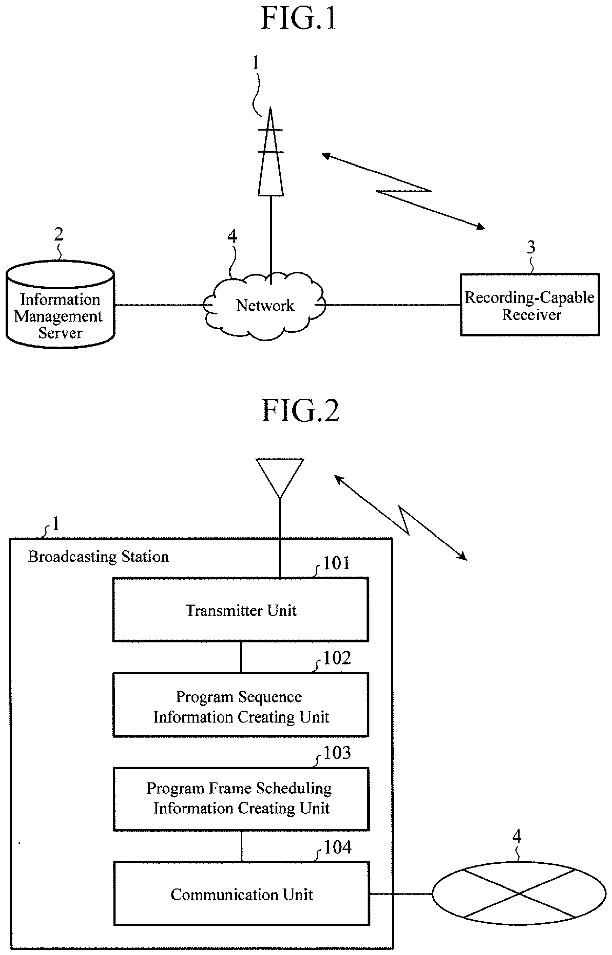

FIG. 1 is a diagram showing a configuration of an information providing system of an embodiment 1 in accordance with the present invention.

The information providing system comprises as shown in FIG. 1 a broadcasting station 1, an information management server 2, a recording-capable receiver (receiving apparatus) 3 and a network 4 such as the Internet.

Here, the recording-capable receiver 3 can be a combination of a video apparatus for receiving a program (video/audio stream) transmitted from the broadcasting station 1 with a recording terminal such as a hard disk recorder, or a PC for receiving and storing a video/audio stream provided from a content provider or a video distribution service/video sharing service (not shown) . Incidentally, the following description will be made on the assumption that the recording-capable receiver 3 is a device for receiving and recording a broadcast.

Next, a configuration of the broadcasting station 1 will be described. FIG. 2 is a block diagram showing a configuration of the broadcasting station 1 of the embodiment 1 in accordance with the present invention. The broadcasting station 1 is a system for transmitting programs. The broadcasting station 1 comprises as shown in FIG. 2 a transmitter unit 101, a program sequence information creating unit 102, a program frame scheduling information creating unit 103 and a communication unit 104.

The transmitter unit 101 is a device for transmitting a broadcast wave (broadcast stream).

The program sequence information creating unit 102 is a device for producing program sequence information 5 which is information about a program contained in the broadcast wave. The program sequence information 5 generated by the program sequence information creating unit 102 is multiplexed with the program to be transmitted as the broadcast wave by the transmitter unit 101. Details of the program sequence information 5 will be described later.

The program frame scheduling information creating unit 103 is a device for producing program frame scheduling information 6 which is information about a program frame (each broadcast time) of a program contained in the broadcast wave. Details of the program frame scheduling information 6 will be described later.

The communication unit 104 is a device for transmitting the program frame scheduling information 6 produced by the program frame scheduling information creating unit 103 to the information management server 2 via the network 4.

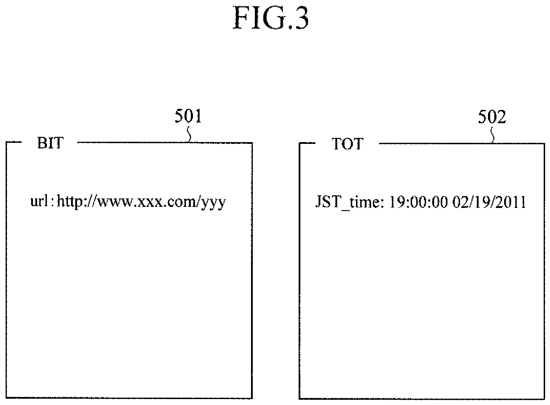

Next, the program sequence information 5 produced by the program sequence information creating unit 102 will be described with reference to FIG. 3. Incidentally, although the following description will be made on the assumption of the digital broadcasting based on ARIB (Association of Radio Industries and Businesses) , an alternative means such as server-type broadcast metadata or the like is also applicable.

As shown in FIG. 3, the program sequence information 5 is composed of a BIT (Broadcaster Information Table) 501 and a TOT (Time Offset Table) 502.

The BIT 501 is a table describing information about the broadcasting station 1 that transmits a program. FIG. 3 shows a hyperlink descriptor of the BIT 501, which describes a URL (Uniform Resource Locator) which is the access destination address information to the information management server 2. A user who is operating the recording-capable receiver 3 can gain access to the information management server 2 using the information.

A TOT 502 is a table describing the present time as the broadcast time of the video/audio information of the program that is broadcast along with the program sequence information 5. The recording-capable receiver 3 can make a time correction of the present time using the information.

Incidentally, when the recording-capable receiver 3 receives the video/audio stream supplied from a content provider or a video distribution service/video sharing service, there are some cases where the program sequence information is not added to the video/audio stream or the like. In this case, the access destination to the information management server 2 can be added using different information such as metadata. In addition, as for the time correction, it is conceivable to adjust to the present time by the time correction based on the NTP (Network Time Protocol) on the network 4, for example.

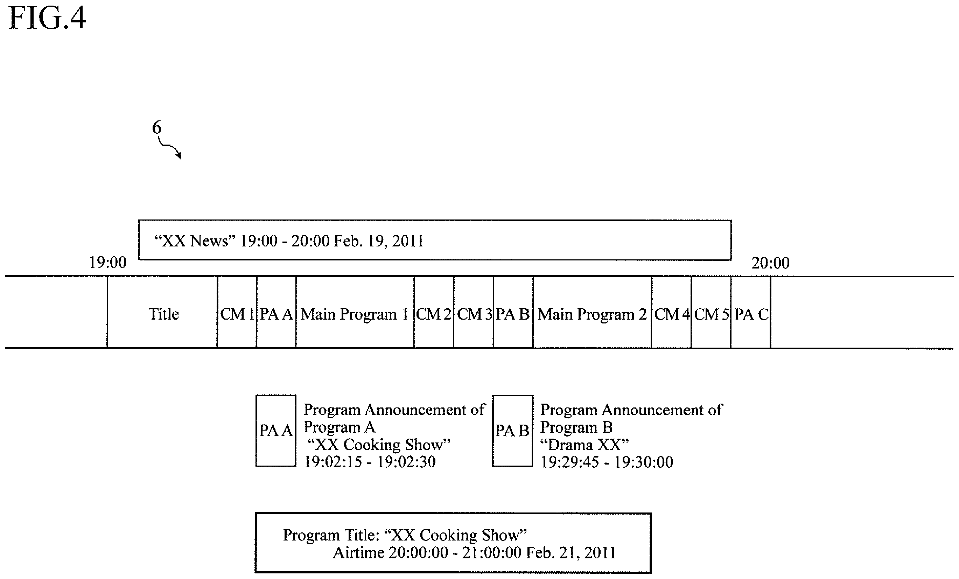

Next, the program frame scheduling information 6 produced by the program frame scheduling information creating unit 103 will be described with reference to FIG. 4.

The program frame scheduling information 6 is a piece that describes information about the individual broadcast times of a program that is broadcast from the broadcasting station 1. As shown in FIG. 4, the frame of "XX news" (19:00 - 20:00 on February 19, 2011) has a "title", "CMs (commercials) 1 - 5", "main programs 1 and 2" and "PAs (program announcements) A - C" set therein, for example. Incidentally, the "PA A" is set in the frame from 19:02:15 to 19:02:30 on February 19, 2011 as a program announcement of a program A, "XX cooking show", and the "PAB" is set in the frame from 19:29:45 to 19: 30: 00 on February 19, 2011 as a program announcement of a program B, "drama XX".

In addition, the "commercials 1 - 5" are associated with the information introduced on the commercials 1 - 5, respectively. Likewise, "PA A - C" are associated with program information about programs advertised in the PAs A - C, respectively. For example, the "PA A" is associated with the program information (program title, the date and time of the broadcast and the like) of the "XX cooking show". Incidentally, the "XX cooking show" is a program that is broadcast from 20 : 00 : 00 to 21 : 00 : 00 on February 21, 2011.

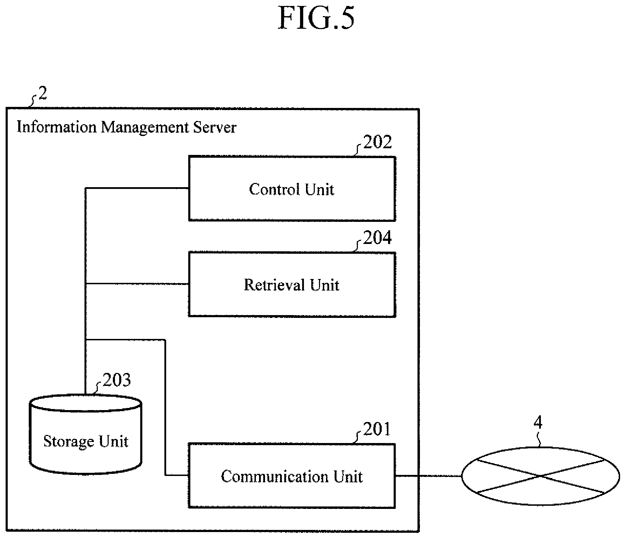

Next, a configuration of the information management server 2 will be described. FIG. 5 is a block diagram showing a configuration of the information management server 2 of the embodiment 1 in accordance with the present invention.

The information management server 2 is a computer system for managing the pertinent information to the video/audio information in the program (video/audio stream) and for providing the pertinent information in response to an inquiry from the recording-capable receiver 3. As shown in FIG. 5, the information management server 2 comprises a communication unit 201, a control unit 202, a storage unit (pertinent information storage unit) 203 and a retrieval unit 204.

The communication unit 201 is a device for receiving the program frame scheduling information 6 transmitted from the communication unit 104 of the broadcasting station 1 via the network 4.

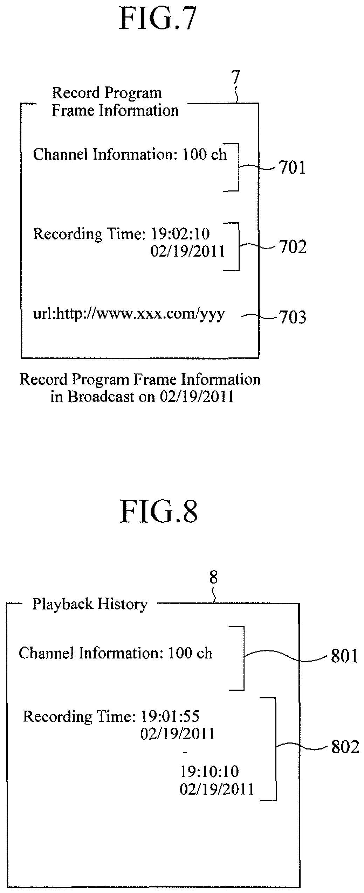

In addition, the communication unit 201 receives a playback history 8 (see FIG. 8) transmitted from a communication unit 310 of the recording-capable receiver 3 via the network 4. Then, it transmits the pertinent information to the video/audio information which is retrieved by the retrieval unit 204 using the playback history 8 (information introduced in a commercial, program information about a program advertised in a program announcement or the like) to the recording-capable receiver 3 via the network 4.

The control unit 202 is a device for successively storing the program frame scheduling information 6 received by the communication unit 201 in the storage unit 203.

The storage unit 203 is a device for storing the program frame scheduling information 6 in accordance with the control of the control unit 202.

The retrieval unit 204 is a device for searching for appropriate video/audio information from the storage unit 203 by comparing the information described in the playback history 8 (channel information 801 and recording time 802 of a program played back) received by the communication unit 201 with the program frame scheduling information 6 stored in the storage unit 203. Then, it extracts the pertinent information to the video/audio information.

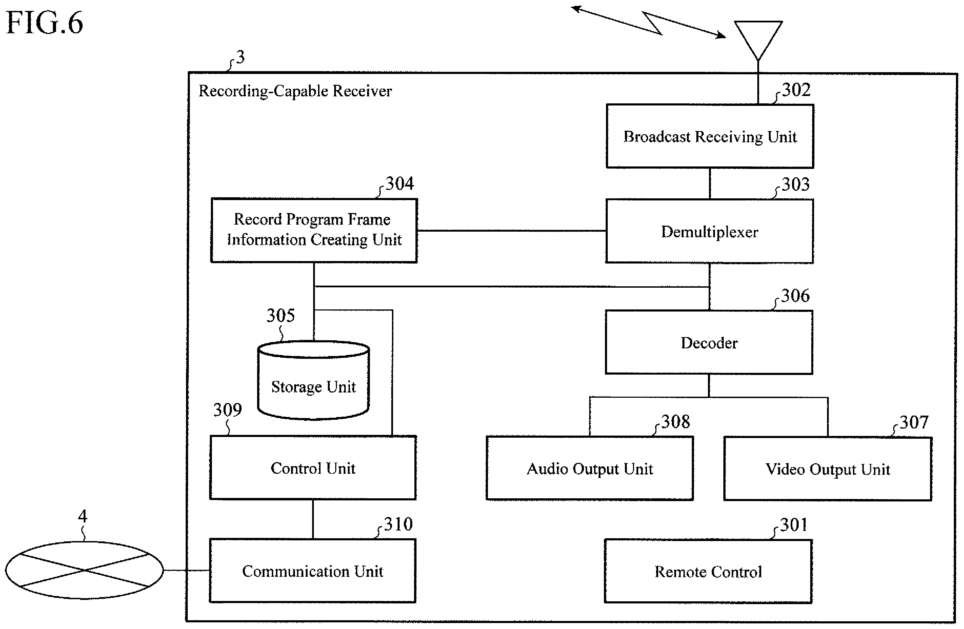

Next, the configuration of the recording-capable receiver 3 will be described. FIG. 6 is a block diagram showing a configuration of the recording-capable receiver 3 of the embodiment 1 in accordance with the present invention.

The recording-capable receiver 3 is a device for receiving and recording a program (video/audio stream) and making an inquiry at the information management server 2 about the pertinent information to the video/audio information in the record program played back. The recording-capable receiver 3 comprises as shown in FIG. 6 a remote control 301, a broadcast receiving unit (receiving unit) 302, a demultiplexer 303, a record program frame information creating unit 304, a storage unit (data storage unit, time information storage unit) 305, a decoder (playback unit) 306, a video output unit (playback unit) 307, an audio output unit (playback unit) 308, a control unit (extracting unit) 309 and a communication unit 310.

The remote control 301 is a device for accepting a user operation.

The broadcast receiving unit 302 is a device for receiving the broadcast wave of a designated channel from among the broadcast waves transmitted by the transmitter unit 101 of the broadcasting station 1 according to the user operation accepted by the remote control 301.

The demultiplexer 303 is a device for demultiplexing the broadcast wave received by the broadcast receiving unit 302, and extracts the program (video/audio stream) and program sequence information 5.

The record program frame information creating unit 304 is a device for generating the record program frame information 7 from the program sequence information 5 extracted by the demultiplexer 303. Details of the record program frame information 7 generated by the record program frame information creating unit 304 will be described later.

The storage unit 305 is a device for storing the video/audio stream extracted by the demultiplexer 303 and the record program frame information 7 about the video/audio stream generated by the record program frame information creating unit 304 by making them correspond to each other.

The decoder 306 is a device for extracting and decoding the designated video/audio stream from the video/audio streams stored in the storage unit 305 in accordance with the user operation accepted by the remote control 301. Incidentally, when the user is viewing a program that is being broadcast now, the decoder 306 decodes the video/audio stream extracted by the demultiplexer 303.

The video output unit 307 is a device for displaying a picture on the screen in response to the video signal undergoing the decoding and output by the decoder 306. In addition, the video output unit 307 displays on the screen the pertinent information (information introduced in a commercial, program information about a program advertised by the program announcement or the like) received by the communication unit 310.

The audio output unit 308 is a device for outputting a voice in response to the audio signal undergoing the decoding and output by the decoder 306.

The control unit 309 is a device for starting storage of the playback history 8 in accordance with the record program frame information 7 about the record program stored in the storage unit 305, following the playback of the record program by the user. Details of the playback history 8 will be described later. In addition, the control unit 309 transmits the playback history 8 to the communication unit 310 in response to the user operation accepted by the remote control 301.

The communication unit 310 is a device for transmitting the playback history 8 delivered from the control unit 309 to the information management server 2 via the network 4, and for receiving the pertinent information transmitted from the information management server 2 via the network 4.

Next, the record program frame information 7 generated by the record program frame information creating unit 304 will be described with reference to FIG. 7. Incidentally, since the present embodiment is described on the assumption that the digital broadcasting conforms to the ARIB, let us assume that an SIT (Selection Information Table) is used as the record program frame information 7. The term "SIT" refers to a table which is one of the program sequence information items stored in the recording information, and which can describe the broadcast time of the recording.

As shown in FIG. 7, channel information 701 of a program to be recorded, the recording time (storage time information) 702 and URL 703 are described in the record program frame information 7.

Here, the record program frame information creating unit 304 describes the recording time 702 by using the broadcast time described in the TOT 502 of the program sequence information 5 transmitted from the broadcasting station 1 together with the program to be recorded. Incidentally, the recording time 702 is updated at an update period of several second units.

Alternatively, the record program frame information 7 can be generated for each program (only at the top of each program) . In this case, only the broadcast time (broadcast start time) described in the TOT 502 of the program sequence information 5 is described as the recording time 702. In addition, when recording a program from the middle and when generating the record program frame information 7 for each program, only the broadcast time of a part (video/audio information) from which the recording is started is described as the recording time 702.

In addition, the record program frame information creating unit 304 describes a URL 703 using a URL described in a BIT 501 of the program sequence information 5 transmitted from the broadcasting station 1 together with a program to be recorded.

Here, in the digital broadcasting, although the recording time 702 and URL 703 are described in the SIT, they can be stored in the storage unit 305 by another means without any problem. In particular, as for the contents other than those a user records, such as a video/audio stream provided from a content provider or from a video distribution service/video sharing service, it is possible to carry out the same operation as the foregoing operation by adding to the contents the record program frame information retaining the information equivalent to the SIT.

Next, the playback history 8 stored by the control unit 309 will be described with reference to FIG. 8.

The playback history 8, which is history information about the playback of a record program by a user, describes channel information 801 of the record program played back and reproduced recording time 802 as shown in FIG. 8.

Here, the control unit 309 describes the channel information 801 using the channel information 701 described in the record program frame information 7 of the record program the user is playing back.

In addition, using the recording time 702 described in the record program frame information 7 of the record program the user is playing back, the control unit 309 describes the reproduced recording time 802 (the recording time from which the playback is started to the recording time at which the present playback is made (or the recording time at which the playback ends)).

Incidentally, when the record program frame information 7 is formed not periodically but for each program (only at the top of the program), the reproduced recording time 802 is described using the recording time (broadcast start time) 702 described in the record program frame information 7 and the offset time from the top of the program. In addition, when the recording is made in the middle of the program and when the record program frame information 7 is formed for each program, the reproduced recording time 802 is described in the same manner using the recording time (broadcast time at the recording start point) 702 described in the record program frame information 7 and the offset time from the recording start point.

Next, the operation of the information providing system with the foregoing configuration will be described.

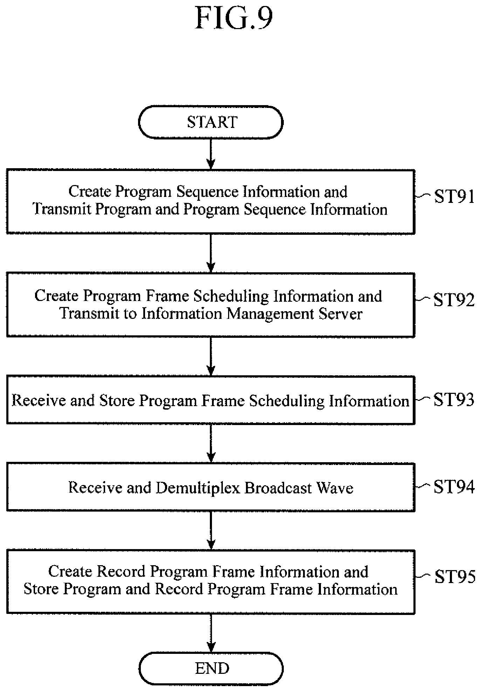

First, the operation as far as the broadcasting station 1 executes the program broadcast and the recording-capable receiver 3 carries out the program recording will be described with reference to FIG. 9.

As shown in FIG. 9, the program sequence information creating unit 102 of the broadcasting station 1 generates the program sequence information 5 (BIT 501 and TOT 502) which is the information about the program the broadcasting station 1 broadcasts, first. Then the transmitter unit 101 multiplexes the program sequence information 5 into the program and transmits as a broadcast wave (step ST91).

In addition, the program frame scheduling information creating unit 103 produces the program frame scheduling information 6 which is the information about the program frame of the foregoing program in synchronization with the creation of the program sequence information 5 by the program sequence information creating unit 102. Then the communication unit 104 transmits the program frame scheduling information 6 to the information management server 2 via the network 4 (step ST92). It is assumed here that a transmitting unit of the program frame scheduling information 6 is a program unit, and that the program frame scheduling information 6 for one program is transmitted to the information management server 2 at the end of the program.

Incidentally, it is also possible to make the transmitting unit of the program frame scheduling information 6 equal to a designated period unit (one second, for example) and to enable a user to gain access to the information management server 2 in the middle of the program.

Next, the communication unit 201 of the information management server 2 receives the program frame scheduling information 6 transmitted from the communication unit 104 of the broadcasting station 1 via the network 4. Then the control unit 202 stores the program frame scheduling information 6 successively in the storage unit (step ST93) . This enables the information management server 2 to acquire the information about the program frames (individual broadcast times) about the program the broadcasting station 1 broadcasts as shown in FIG. 4.

On the other hand, the broadcast receiving unit 302 of the recording-capable receiver 3 receives the broadcast wave of the designated channel from among the broadcast waves transmitted from the transmitter unit 101 of the broadcasting station 1 in accordance with the user operation accepted by the remote control 301. Then the demultiplexer 303 extracts the program (video/audio stream) and program sequence information 5 by demultiplexing the broadcast wave (step ST94).

Next, the record program frame information creating unit 304 produces the record program frame information 7 from the program sequence information 5 extracted by the demultiplexer 303. It is assumed here that it updates the record program frame information 7 periodically. Then the storage unit 305 stores the video/audio stream extracted by the demultiplexer 303 and the record program frame information 7 about the video/audio stream produced by the record program frame information creating unit 304 by making them correspond to each other (step ST95). Thus the recording-capable receiver 3 can store the information about the record program (channel information 701, recording time 702 and URL 703 of the information management server 2) as shown in FIG. 7.

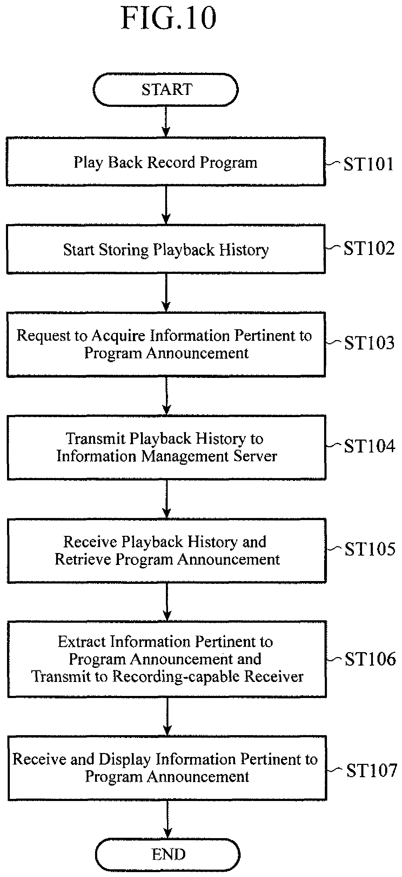

Next, the operation as far as the recording-capable receiver 3 plays back the record program, makes an inquiry about the pertinent information to the video/audio information in the program played back, and acquires the pertinent information from the information management server 2 will be described with reference to FIG. 10. Incidentally, the following description will be made by way of example which acquires as the pertinent information to the video/audio information the program information about the program advertised in a program announcement.

As shown in FIG. 10, the remote control 301 receives a request to play back a record program, first. Then the decoder 3 06 extracts and decodes the designated program from among the programs stored in the storage unit 305, and outputs video and voice via the video output unit 307 and audio output unit 308 (step ST101). This enables the user to view a desired record program.

On the other hand, along with the playback of the record program by the user, the control unit 309 starts storing the playback history 8 of the user in accordance with the record program frame information 7 about the record program stored in the storage unit 305 (step ST102) . This enables the control unit 309 to store the playback history 8 (channel information 801 and reproduced recording time 802) as shown in FIG. 8.

Incidentally, when playing back a record program of the same channel continuously, it is also possible to describe as the reproduced recording time 802 the broadcast time 702 described in the initial record program frame information 7 and the broadcast time 702 plus the update period of the record program frame information 7 described in the final record program frame information 7.

Next, assume that the user views the PA A while the recording-capable receiver 3 plays back the "XX news" of FIG. 4, for example, and that after that (right after that, during playback, or after the end of the playback), the user wants to make a videotape setting or viewing setting of the program ("XX cooking show") advertised in the PA A. In this case, the user operates the remote control 301 and makes a request to acquire from among the record programs the program information about the program advertised by the program announcement that is broadcast during the playback (step ST103).

Next, the control unit 309 delivers the stored playback history 8 to the communication unit 310 in response to the program information acquisition request from the user. Then the communication unit 310 transmits the playback history 8 to the information management server 2 via the network 4 (step ST104) .

Next, the communication unit 201 of the information management server 2 receives the playback history 8 transmitted from the communication unit 310 of the recording-capable receiver 3 via the network 4. Then the retrieval unit 204 compares the information described in the playback history 8 (channel information 801 and reproduced recording time 802) with the program frame scheduling information 6 stored in the storage unit 203, and retrieves all the program announcements in the video/audio stream the user plays back (step ST105).

For example, when the user plays back the video/audio stream with the recording time 19:01:55 - 19:10:10 on 02/19/2011 as shown in FIG. 8, the program announcement (PAA) that is broadcast during the foregoing period of time in FIG. 4 is retrieved. At this time, since the information management server 2 retrieves the program announcement by using the playback history 8 the user plays back and the broadcast time of the video/audio information (program announcement) described in the program frame scheduling information 6, it can reduce the retrieval time taken as compared with the conventional retrieval processing which is executed on the base of the date and time of the broadcast and the video and acoustic information of the whole program.

Next, the retrieval unit 204 extracts the program information about the program advertised by the program announcement retrieved. Then the communication unit 201 transmits the program information obtained as a result of the retrieval by the retrieval unit 204 to the recording-capable receiver 3 (step ST106). Thus, in the foregoing example, the program information (such as the program title and the date and time of the broadcast) about the program A "XX cooking show" advertised by the PA A is sent to recording-capable receiver 3.

Next, the communication unit 310 of the recording-capable receiver 3 receives the program information transmitted from the information management server 2 via the network 4. Then the video output unit 307 displays the program information to enable the user to select the videotape setting or viewing setting (step ST107) .

Incidentally, the foregoing description is made by way of example that retrieves the program announcement using the playback history 8 of the user, in which case the program information advertised in all the program announcements which are broadcast during the playback is acquired. In contrast with this, it is also possible to pinpoint the recording time 802 with the remote control 301 while viewing the program announcement in the program. This enables the information management server 2 to select a single piece of program information, which makes it unnecessary for it to select the program for the videotape setting/viewing setting from a plurality of pieces of the program information.

In addition, although the foregoing description is made by way of example that acquires the program information to carry out the videotape setting/viewing setting, this is not essential. For example, the same processing can be used to acquire the program information for other purposes.

In addition, although the foregoing description is made by way of example that acquires the program information about the program advertised in the program announcement, this is not essential. For example, it is also applicable to a case of acquiring information about a product or service introduced in a commercial or information about a product or the like used in a program (such as a drama).

In addition, although the foregoing description is made by way of example that acquires the pertinent information to the video/audio information contained in the broadcast, it is also applicable to a case of acquiring the pertinent information to the video/audio information contained in the video/audio stream provided from a content provider or video distribution service/video sharing service via the network 4 or in the video/audio stream provided from a medium such as a DVD.

As described above, according to the present embodiment 1, since it is conf igured in such a manner as to use, when acquiring from the information management server the pertinent information to the commercial or program announcement viewed at the playback, the time at which the video/audio information is broadcast without using the date and time of the broadcast of the record program itself or the video and acoustic information thereof, it can greatly reduce the retrieval time.

### EMBODIMENT 2

The embodiment 1 shows a case where the information management server 2 accepts the information only from the broadcasting station 1 and provides the information to a user. In contrast with this, the embodiment 2 shows a case where the information management server 2 accepts not only the information from the broadcasting station 1, but also information provided from the user.

As for the internal configurations of the information providing system and of the individual blocks 1 - 3 of the embodiment 2, since they are the same as the configuration of the information providing system and the internal configurations of the individual blocks 1 - 3 of the embodiment 1 shown in FIGs. 1, 2, 5 and 6, the following description will be made with reference to FIGs. 1, 2, 5 and 6.

Incidentally, it is assumed here that the video output unit 307 of the recording-capable receiver 3 shown in FIG. 6 can display an onscreen keyboard on the screen in accordance with the user operation accepted by the remote control 301 and input text information. In other words, the video output unit 307 operates as a creating unit for producing the pertinent information to the designated video/audio information in the record program (video/audio stream) played back.

Next, the operation of the information providing system of the embodiment 2 will be described.

Incidentally, in the following description, the operation will be described when a user manually creates the pertinent information to the designated video/audio information during the playback of a record program by the recording-capable receiver 3, and registers the pertinent information in the information management server 2. Here, as a registering means of the user, it is also possible to use not only the recording-capable receiver 3, but also a hard disk recorder, PC, smartphone and mobile phone.

First, when the video/audio information as to which the pertinent information is to be created is displayed on the screen while the recording-capable receiver 3 plays back the record program, a user interrupts the playback. In addition, the control unit 309 retains the recording time 702 when the playback is interrupted.

Next, the video output unit 307 displays the onscreen keyboard on the screen in response to the user operation, and receives the pertinent information to the video/audio information. For example, it receives the positional information about a restaurant appearing in the drama while the user is viewing the drama recorded.

Next, the control unit 309 collectively supplies the communication unit 310 with the input information from the user, and the channel information 701 and recording time 702 it retains . Then the communication unit 310 transmits these items of information to the information management server 2 via the network 4.

Next, the communication unit 201 of the information management server 2 receives the information (input information, channel information 701 and recording time 702) transmitted from the recording-capable receiver 3 via the network 4.

After that, the retrieval unit 204 retrieves the appropriate program frame scheduling information 6 from the storage unit 203 using the channel information 701 and recording time 702. Then according to the control of the control unit 202, the storage unit 203 adds the foregoing input information to the appropriate time frame of the program frame scheduling information 6. This makes it possible to register the pertinent information to the designated video/audio information, which the user created manually, to the information management server 2.

In addition, although the foregoing description is made by way of example that adds the information pertinent to the video/audio information contained in the broadcast, it is also applicable to a case where it adds the information pertinent to the video/audio information which is contained in the video/audio stream provided from the content provider or video distribution service/video sharing service via the network 4 or which is contained in the video/audio stream provided by a medium such as a DVD.

As described above, according to the present embodiment 2, since it is configured in such a manner that it causes the user to manually create the pertinent information and that the information management server 2 accepts not only the information provided from the broadcasting station 1, but also the information the user provides, it can greatly increase the expandability of the program frame scheduling information 6.

Incidentally, it is to be understood that a free combination of the individual embodiments, variations of any components of the individual embodiments or removal of any components of the individual embodiments are possible within the scope of the present invention.

### INDUSTRIAL APPLICABILITY

An information providing system in accordance with the present invention can greatly reduce the retrieval time when acquiring from the information management server the pertinent information to a commercial or program announcement a user viewed during playback. Accordingly it is suitable for an application to an information providing system that provides the pertinent information to the video/audio information of a commercial or program announcement contained in the video/audio stream provided via a broadcast or network or contained in the video/audio stream provided by a medium such as a DVD.

### DESCRIPTION OF REFERENCE SYMBOLS

1 broadcasting station; 2 information management server; 3 recording-capable receiver (receiving apparatus); 4 network; 5 program sequence information; 6 program frame scheduling information; 7 record program frame information; 8 playback history; 101 transmitter unit; 102 program sequence information creating unit; 103 program frame scheduling information creating unit; 104 communication unit; 201 communication unit; 202 control unit; 203 storage unit (pertinent information storage unit); 204 retrieval unit; 301 remote control; 302 broadcast receiving unit (receiving unit); 303 demultiplexer; 304 record program frame information creating unit; 305 storage unit (data storage unit, time information storage unit); 306 decoder (playback unit); 307 video output unit (playback unit, creating unit); 308 audio output unit (playback unit); 309 control unit (extracting unit); 310 communication unit; 501 BIT; 502 TOT; 701 channel information; 702 recording time; 703 URL; 801 channel information; 802 reproduced recording time.

## Claims

1. An information providing system comprising a video/audio provider (1), a receiving apparatus (3) and an information management server (2), wherein the video/audio provider (1) is adapted to transmit to the receiving apparatus (3) a video/audio stream in the form of programs including specific video/audio information and program sequence information which is information about a program contained in the video/audio stream, and to transmit to the information management server (2) program frame scheduling information which is information about a program frame including the transmitting time of a program contained in the video/audio stream, and wherein the information management server (2) is adapted to manage pertinent information to specific video/audio information contained in a video/audio stream, and to provide the pertinent information in response to an inquiry from the receiving apparatus (3), wherein the receiving apparatus (3) comprises:
a receiving unit (302) adapted to receive the video/audio stream from the video/audio provider (1);
a data storage unit (305) adapted to store the video/audio stream received by the receiving unit;
a time information storage unit (305) adapted to store , as record program frame information, time information corresponding to program sequence transmitted from the video/audio provider (1) ;
a playback unit (307, 308) for playing back the video/audio stream stored in the data storage unit (305);
an extracting unit (309) adapted to extract from the time information storage unit (305) the record program frame information corresponding to the programs in the video/audio stream played back by the playback unit (307, 308);
a device (309) adapted to store a playback history (8) which is history information about the playback of a record program and comprises the record program frame information, and
a receiving apparatus side communication unit (310) adapted to transmit the record program frame information extracted by the extracting unit (309) to the information management server (2) for inquiring about pertinent information to the specific video/audio information on a program played back, and
wherein the information management server (2) comprises: a pertinent information storage unit (203) adapted to store the program frame scheduling information received by the video/audio provider (1) and including pertinent information to the specific video/audio information along with the time information that is added to the appropriate specific video/audio information;
a retrieval unit (204) for extracting appropriate pertinent information from the pertinent information storage unit (203) by comparing the record program frame information transmitted from the receiving apparatus side communication unit (310) with the time information stored in the pertinent information storage unit (203);
and
a server side communication unit (201) adapted to transmit the pertinent information extracted by the retrieval unit (204) to the receiving apparatus (3) in response to an inquiry from the receiving apparatus (3), wherein the receiving apparatus side communication unit (310) is adapted to receive the pertinent information corresponding to the record program frame information from the information management server (2).

2. The information providing system according to claim 1, wherein
the time information storage unit (304) stores, as initial time information, time information added to initial video/audio information in the video/audio stream stored in the data storage unit (305) instead of the storage time information; and
the extracting unit extracts the storage time information corresponding to the video/audio information in the video/audio stream played back by the playback unit by using the initial time information stored in the time information storage unit and an offset time between the video/audio information and the initial video/audio information.

3. The information providing system according to claim 1, wherein
the receiving unit (302) receives the video/audio stream that is broadcast from a broadcasting station (1).

4. The information providing system according to claim 1, wherein
the receiving unit (302) receives the video/audio stream via a network (4).

5. The information providing system according to claim 1, wherein
the receiving apparatus (3) further comprises:
a creating unit (304) for producing the pertinent information to designated video/audio information in the video/audio stream played back by the playback unit, and wherein
the extracting unit (303) extracts the storage time information corresponding to the video/audio information as to which the creating unit (304) produces the pertinent information;
the receiving apparatus side communication unit (310) transmits the pertinent information produced by the creating unit (304) and the storage time information extracted by the extracting unit (303) to the information management server (2) ; and
the pertinent information storage unit (203) of the information management (2) server stores the pertinent information transmitted from the receiving apparatus side communication unit (310) along with the time information corresponding to the storage time information.

6. A receiving apparatus (3) for receiving a video/audio stream in the form of programs including specific video/audio information and program sequence information which is information about a program contained in the video/audio stream, the receiving apparatus (3) comprising:
a receiving unit (302) adapted to receive the video/audio stream from the video/audio provider (1);
a data storage unit (305) adapted to store the video/audio stream received by the receiving unit;
a time information storage unit (305) adapted to store , as record program frame information, time information corresponding to program sequence transmitted from the video/audio provider (1) ;
a playback unit (307, 308) for playing back the video/audio stream stored in the data storage unit (305);
an extracting unit (309) adapted to extract from the time information storage unit (305) the record program frame information corresponding to the programs in the video/audio stream played back by the playback unit (307, 308); a device (309) adapted to store a playback history (8) which is history information about the playback of a record program and comprises the record program frame information, and
a receiving apparatus side communication unit (310) adapted to transmit the record program frame information extracted by the extracting unit (309) to the information management server (2) for inquiring about pertinent information to the specific video/audio information on a program played back, and to receive the pertinent information corresponding to the record program frame information from the information management server (2).

7. An information management server (2) for managing pertinent information to specific video/audio information contained in a video/audio stream, and for providing the pertinent information in response to an inquiry from a receiving apparatus (3), the information management server (2) comprising:
a server side communication unit (201) adapted to receive from the video/audio provider (1) program frame scheduling information which is information about a program frame including the transmitting time of a program contained in the audio/video stream;
a pertinent information storage unit adapted to store the program frame scheduling information including pertinent information to the specific video/audio information along with the time information that is added to the appropriate specific video/audio information;
a retrieval unit (204) for extracting appropriate pertinent information from the pertinent information storage unit (203) by comparing the record program frame information transmitted from the receiving apparatus side communication unit (310) with the time information stored in the pertinent information storage unit (203);
and
a server side communication unit (201) adapted to transmit the pertinent information extracted by the retrieval unit (204) to the receiving apparatus (3) in response to an inquiry from the receiving apparatus (3).

## Patentansprüche

1. Informationsbereitstellungssystem, umfassend einen Video/Audio-Bereitsteller (1), eine Empfangsvorrichtung (3) und einen Informationsverwaltungsserver (2), wobei der Video/Audio-Bereitsteller (1) ausgelegt ist, an die Empfangsvorrichtung (3) einen Video/Audio-Stream in Form von Programmen, enthaltend bestimmte Video/Audioinformationen und Programmsequenzinformationen, die Informationen über ein im Video-/Audio-Stream enthaltenes Programm sind, zu übertragen und an den Informationsverwaltungsserver (2) Programmrahmenzeitplaninformationen, die Informationen sind über einen Programmrahmen, enthaltend die Übertragungszeit eines im Video/Audio-Stream enthaltenen Programms, zu übertragen und wobei der Informationsverwaltungsserver (2) ausgelegt ist, relevante Informationen zu bestimmten Video/Audio-Informationen, die in einem Video/Audio-Stream enthalten sind, zu verwalten und die relevanten Informationen bereitzustellen in Antwort auf eine Anfrage von der Empfangsvorrichtung (3),
wobei die Empfangsvorrichtung (3) umfasst:
eine Empfangseinheit (302), die ausgelegt ist, den Video/Audio-Stream vom Video/Audio-Bereitsteller (1) zu empfangen;
eine Datenspeichereinheit (305), die ausgelegt ist, den von der Empfangseinheit empfangenen Video/Audio-Stream zu speichern;
eine Zeitinformationsspeichereinheit (305), die ausgelegt ist, als Aufzeichnungsprogrammrahmeninformationen, Zeitinformationen entsprechend der vom Video/Audio-Bereitsteller (1) übertragenen Programmsequenz zu speichern;
eine Wiedergabeeinheit (307, 308) zum Wiedergeben des in der Datenspeichereinheit (305) gespeicherten Video/Audio-Streams.
eine Extrahierungseinheit (309), die ausgelegt ist, aus der Zeitinformationsspeichereinheit (305) die Aufzeichnungsprogrammrahmeninformationen entsprechend den Programmen in dem durch die Wiedergabeeinheit (307, 308) wiedergegebenen Video/Audio-Stream zu extrahieren;
eine Einrichtung (309), die ausgelegt ist, eine Wiedergabehistorie (8), welche Historieninformationen über die Wiedergabe eines Aufzeichnungsprogramms sind, zu speichern und die Aufzeichnungsprogrammrahmeninformationen umfasst, und
eine empfangsvorrichtungsseitige Kommunikationseinheit (310), die ausgelegt ist, die durch die Extrahierungseinheit (309) extrahierten Aufzeichnungsprogrammrahmeninformationen an den Informationsverwaltungsserver (2) zu übertragen zum Anfragen nach relevanten Informationen zu den bestimmten Video/Audio-Informationen auf einem wiedergegebenen Programm, und
wobei der Informationsverwaltungsserver (2) umfasst: eine Relevante-Informationen-Speichereinheit (203), die ausgelegt ist, die vom Video/Audio-Bereitsteller (1) empfangenen und relevante Informationen zu den bestimmten Video/Audio-Informationen enthaltenden Programmrahmenzeitplaninformationen zu speichern zusammen mit den Zeitinformationen, die zu den geeigneten bestimmten Video/Audio-Informationen hinzugefügt wurden;
eine Abrufeinheit (204) zum Extrahieren geeigneter relevanter Informationen aus der Relevante-Informationen-Speichereinheit (203) durch Vergleichen der von der empfangsvorrichtungsseitigen Kommunikationseinheit (310) übertragenen Aufzeichnungsprogrammrahmeninformationen mit den in der Relevante-Informationen-Speichereinheit (203) gespeicherten Zeitinformationen; und
eine serverseitige Kommunikationseinheit (201), die ausgelegt ist, die durch die Abrufeinheit (204) extrahierten relevanten Informationen an die Empfangsvorrichtung (3) zu übertragen in Antwort auf eine Anfrage von der Empfangsvorrichtung (3), wobei die empfangsvorrichtungsseitige Kommunikationseinheit (310) ausgelegt ist, die relevanten Informationen entsprechend den Aufzeichnungsprogrammrahmeninformationen vom Informationsverwaltungsserver (2) zu empfangen.

2. Informationsbereitstellungssystem nach Anspruch 1, wobei die Zeitinformationsspeichereinheit (304) als Ausgangszeitinformationen, Zeitinformationen, die zu Ausgangs-Video/Audio-Informationen in dem in der Datenspeichereinheit (305) gespeicherten Video/Audio-Stream hinzugefügt wurden, anstelle der Speicherzeitinformationen speichert; und die Extrahierungseinheit die Speicherzeitinformationen entsprechend den Video/Audio-Informationen in dem durch die Wiedergabeeinheit wiedergegebenen Video/Audio-Stream extrahiert unter Verwendung der in der Zeitinformationsspeichereinheit gespeicherten Ausgangszeitinformationen und einer Offset-Zeit zwischen den Video/Audio-Informationen und den Ausgangs-Video/Audio-Informationen.

3. Informationsbereitstellungssystem nach Anspruch 1, wobei die Empfangseinheit (302) den Video/Audio-Stream, der von einer Broadcast-Station (1) gebroadcastet wird, empfängt.

4. Informationsbereitstellungssystem nach Anspruch 1, wobei die Empfangseinheit (302) den Video/Audio-Stream über ein Netzwerk (4) empfängt.

5. Informationsbereitstellungssystem nach Anspruch 1, wobei die Empfangsvorrichtung (3) ferner umfasst:
eine Erstellungseinheit (304) zum Erzeugen der relevanten Informationen zu festgelegten Video/Audioinformationen in dem durch die Wiedergabeeinheit wiedergegebenen Video/Audio-Stream, und wobei die Extrahierungseinheit (303) die Speicherzeitinformationen entsprechend den Video/Audioinformationen, für die die Erstellungseinheit (304) die relevanten Informationen erzeugt, extrahiert;
die empfangsvorrichtungsseitige Kommunikationseinheit (310) die durch die Erstellungseinheit (304) erzeugten relevanten Informationen und die durch die Extrahierungseinheit (303) extrahierten Speicherzeitinformationen an den Informationsverwaltungsserver (2) überträgt; und
die Relevante-Informationen-Speichereinheit (203) des Informationsverwaltungsservers (2) die von der empfangsvorrichtungsseitigen Kommunikationseinheit (310) übertragenen relevanten Informationen speichert zusammen mit den Zeitinformationen entsprechend den Speicherzeitinformationen.

6. Empfangsvorrichtung (3) zum Empfangen eines Video/Audio-Streams in Form von Programmen, enthaltend bestimmte Video/Audioinformationen und Programmsequenzinformationen, die Informationen über ein Programm sind, das im Video/Audio-Stream enthalten ist,
wobei die Empfangsvorrichtung (3) umfasst:
eine Empfangseinheit (302), die ausgelegt ist, den Video/Audio-Stream vom Video/Audio-Bereitsteller (1) zu empfangen;
eine Datenspeichereinheit (305), die ausgelegt ist, den von der Empfangseinheit empfangenen Video/Audio-Stream zu speichern;
eine Zeitinformationsspeichereinheit (305), die ausgelegt ist, als Aufzeichnungsprogrammrahmeninformationen, Zeitinformationen entsprechend der vom Video/Audio-Bereitsteller (1) übertragenen Programmsequenz zu speichern;
eine Wiedergabeeinheit (307, 308) zum Wiedergeben des in der Datenspeichereinheit (305) gespeicherten Video/Audio-Streams;
eine Extrahierungseinheit (309), die ausgelegt ist, aus der Zeitinformationsspeichereinheit (305) die
Aufzeichnungsprogrammrahmeninformationen entsprechend den Programmen in dem durch die Wiedergabeeinheit (307, 308) wiedergegebenen Video/Audio-Stream zu extrahieren, eine Einrichtung (309), die ausgelegt ist, eine Wiedergabehistorie (8), welche Historieninformationen über die Wiedergabe eines Aufzeichnungsprogramms sind, zu speichern und die Aufzeichnungsprogrammrahmeninformationen umfasst, und
eine empfangsvorrichtungsseitige Kommunikationseinheit (310), die ausgelegt ist, die durch die Extrahierungseinheit (309) extrahierten Aufzeichnungsprogrammrahmeninformationen an den Informationsverwaltungsserver (2) zu übertragen zum Anfragen nach relevanten Informationen zu den bestimmten Video/Audioinformationen auf einem wiedergegebenen Programm, und die relevanten Informationen entsprechend den Aufzeichnungsprogrammrahmeninformationen vom Informationsverwaltungsserver (2) zu empfangen.

7. Informationsverwaltungsserver (2) zum Verwalten von relevanten Informationen zu bestimmten Video/Audioinformationen, die in einem Video/Audio-Stream enthalten sind, und zum Bereitstellen der relevanten Informationen in Antwort auf eine Anfrage von einer Empfangsvorrichtung (3), wobei der Informationsverwaltungsserver (2) umfasst:
eine serverseitige Kommunikationseinheit (201), die ausgelegt ist, vom Video/Audio-Bereitsteller (1) Programmrahmenzeitplaninformationen, die Informationen sind über einen Programmrahmen, enthaltend die Übertragungszeit eines im Audio/Video-Streams enthaltenen Programms, zu empfangen;
eine Relevante-Informationen-Speichereinheit, die ausgelegt ist, die Programmrahmenzeitplaninformationen, enthaltend relevante Informationen zu den bestimmten Video/Audioinformationen, zu speichern zusammen mit den Zeitinformationen, die zu den geeigneten bestimmten Video/Audioinformationen hinzugefügt wurden;
eine Abrufeinheit (204) zum Extrahieren geeigneter relevanter Informationen aus der Relevante-Informationen-Speichereinheit (203) durch Vergleichen der von der empfangsvorrichtungsseitigen Kommunikationseinheit (310) übertragenen Aufzeichnungsprogrammrahmeninformationen mit den in der Relevante-Informationen-Speichereinheit (203) gespeicherten Zeitinformationen;
und
eine serverseitige Kommunikationseinheit (201), die ausgelegt ist, die durch die Abrufeinheit (204) extrahierten relevanten Informationen an die Empfangsvorrichtung (3) zu übertragen in Antwort auf eine Anfrage von der Empfangsvorrichtung (3).

## Revendications

1. Système de fourniture d'informations comprenant un fournisseur vidéo/audio (1), un appareil de réception (3) et un serveur de gestion d'informations (2), le fournisseur vidéo/audio (1) étant conçu pour transmettre à l'appareil de réception (3) un flux vidéo/audio sous la forme de programmes contenant des informations vidéo/audio spécifiques et des informations de séquence de programme qui sont des informations concernant un programme contenu dans le flux vidéo/audio, et pour transmettre au serveur de gestion d'informations (2) des informations de planification de trame de programme qui sont des informations concernant une trame de programme comprenant le temps de transmission d'un programme contenu dans le flux vidéo/audio et le serveur de gestion d'informations (2) étant conçu pour gérer des informations pertinentes relatives à des informations vidéo/audio spécifiques contenues dans un flux vidéo/audio et pour fournir les informations pertinentes en réponse à une demande provenant de l'appareil de réception (3),
l'appareil de réception (3) comprenant :
une unité de réception (302) conçue pour recevoir le flux vidéo/audio provenant du fournisseur vidéo/audio (1) ;
une unité de stockage de données (305) conçue pour stocker le flux vidéo/audio reçu par l'unité de réception ;
une unité de stockage d'informations temporelles (305) conçue pour stocker, en tant qu'informations de trame de programme d'enregistrement, des informations temporelles correspondant à une séquence de programme transmise par le fournisseur vidéo/audio (1) ;
une unité de lecture (307, 308) permettant de lire le flux vidéo/audio stocké dans l'unité de stockage de données (305) ;
une unité d'extraction (309) conçue pour extraire de l'unité de stockage d'informations temporelles (305) les informations de trame de programme d'enregistrement correspondant aux programmes dans le flux vidéo/audio lu par l'unité de lecture (307, 308) ;
un dispositif (309) conçu pour stocker un historique de lecture (8) qui est constitué d'informations historiques concernant la lecture d'un programme d'enregistrement et qui comprend les informations de trame de programme d'enregistrement et
une unité de communication côté appareil de réception (310), conçue pour transmettre les informations de trame de programme d'enregistrement extraites par l'unité d'extraction (309) au serveur de gestion d'informations (2) pour effectuer une requête concernant les informations pertinentes relatives aux informations vidéo/audio spécifiques sur un programme lu et
le serveur de gestion d'informations (2) comprenant :
une unité de stockage d'informations pertinentes (203) conçue pour stocker les informations de planification de trame de programme reçues par le fournisseur vidéo/audio (1) et comprenant les informations pertinentes relatives aux informations vidéo/audio spécifiques en même temps que les informations temporelles qui sont ajoutées aux informations vidéo/audio spécifiques appropriées ;
une unité de récupération (204) pour l'extraction d'informations pertinentes appropriées dans l'unité de stockage d'informations pertinentes (203) en comparant les informations de trame de programme d'enregistrement transmises par l'unité de communication côté appareil de réception (310) avec les informations temporelles stockées dans l'unité de stockage d'informations pertinentes (203) ; et
une unité de communication côté serveur (201) conçue pour transmettre les informations pertinentes extraites par l'unité de récupération (204) à l'appareil de réception (3) en réponse à une demande provenant de l'appareil de réception (3), l'unité de communication côté appareil de réception (310) étant conçue pour recevoir les informations pertinentes correspondant aux informations de trame de programme d'enregistrement provenant du serveur de gestion d'informations (2).

2. Système de fourniture d'informations selon la revendication 1, dans lequel
l'unité de stockage d'informations temporelles (304) stocke, en tant qu'informations temporelles initiales, des informations temporelles ajoutées à des informations vidéo/audio initiales dans le flux vidéo/audio stocké dans l'unité de stockage de données (305) au lieu des informations temporelles de stockage ; et
l'unité d'extraction extrait les informations temporelles de stockage correspondant aux informations vidéo/audio dans le flux vidéo/audio lu par l'unité de lecture en utilisant les informations temporelles initiales stockées dans l'unité de stockage d'informations temporelles et un temps de décalage entre les informations vidéo/audio et les informations vidéo/audio initiales.

3. Système de fourniture d'informations selon la revendication 1, dans lequel
l'unité de réception (302) reçoit le flux vidéo/audio qui est diffusé à partir d'une station de diffusion (1).

4. Système de fourniture d'informations selon la revendication 1, dans lequel
l'unité de réception (302) reçoit le flux vidéo/audio par l'intermédiaire d'un réseau (4).

5. Système de fourniture d'informations selon la revendication 1, dans lequel
l'appareil de réception (3) comprend en outre :
une unité de création (304) pour la production des informations pertinentes relatives à des informations vidéo/audio désignées dans le flux vidéo/audio lu par l'unité de lecture, et dans lequel
l'unité d'extraction (303) extrait les informations temporelles de stockage correspondant aux informations vidéo/audio selon lesquelles l'unité de création (304) produit les informations pertinentes ;
l'unité de communication côté appareil de réception (310) transmet les informations pertinentes produites par l'unité de création (304) et les informations temporelles de stockage extraites par l'unité d'extraction (303) au serveur de gestion d'informations (2) ; et
l'unité de stockage d'informations pertinentes (203) du serveur de gestion d'informations (2) stocke les informations pertinentes transmises par l'unité de communication côté appareil de réception (310) en même temps que les informations temporelles correspondant aux informations temporelles de stockage.

6. Appareil de réception (3) pour la réception d'un flux de vidéo/audio sous la forme de programmes comprenant des informations vidéo/audio spécifiques et des informations de séquence de programme qui sont des informations concernant un programme contenu dans le flux vidéo/audio,
l'appareil de réception (3) comprenant :
une unité de réception (302) conçue pour recevoir le flux vidéo/audio provenant du fournisseur vidéo/audio (1) ;
une unité de stockage de données (305) conçue pour stocker le flux vidéo/audio reçu par l'unité de réception ;
une unité de stockage d'informations temporelles (305) conçue pour stocker, en tant qu'informations de trame de programme d'enregistrement, des informations temporelles correspondant à une séquence de programme transmise par le fournisseur vidéo/audio (1) ;
une unité de lecture (307, 308) pour la lecture du flux vidéo/audio stocké dans l'unité de stockage de données (305) ;
une unité d'extraction (309) conçue pour extraire de l'unité de stockage d'informations temporelles (305) les informations de trame de programme d'enregistrement correspondant aux programmes dans le flux vidéo/audio lu par l'unité de lecture (307, 308) ;
un dispositif (309) conçu pour stocker un historique de lecture (8) qui est constitué d'informations historiques concernant la lecture d'un programme d'enregistrement et qui comprend les informations de trame de programme d'enregistrement et
une unité de communication côté appareil de réception (310) conçue pour transmettre les informations de trame de programme d'enregistrement extraites par l'unité d'extraction (309) au serveur de gestion d'informations (2) pour une requête concernant des informations pertinentes relatives aux informations vidéo/audio spécifiques sur un programme lu, et pour recevoir les informations pertinentes correspondant aux informations de trame de programme d'enregistrement provenant du serveur de gestion d'informations (2).

7. Serveur de gestion d'informations (2) pour la gestion d'informations pertinentes relatives à des informations vidéo/audio spécifiques contenues dans un flux vidéo/audio et pour la fourniture d'informations en réponse à une demande provenant d'un appareil de réception (3), le serveur de gestion d'informations (2) comprenant :
une unité de communication côté serveur (201) conçue pour recevoir, en provenance du fournisseur vidéo/audio (1), des informations de planification de trame de programme qui sont des informations concernant une trame de programme comprenant le temps de transmission d'un programme contenu dans le flux vidéo/audio ;
une unité de stockage d'informations pertinentes conçue pour stocker les informations de planification de trame de programme comprenant des informations pertinentes relatives aux informations vidéo/audio spécifiques en même temps que les informations temporelles qui sont ajoutées aux informations vidéo/audio spécifiques appropriées ;
une unité de récupération (204) pour l'extraction d'informations pertinentes appropriées dans l'unité de stockage d'informations pertinentes (203) en comparant les informations de trame de programme d'enregistrement transmises par l'unité de communication côté appareil de réception (310) avec les informations temporelles stockées dans l'unité de stockage d'informations pertinentes (203) ; et
une unité de communication côté serveur (201) conçue pour transmettre les informations pertinentes extraites par l'unité de récupération (204) à l'appareil de réception (3) en réponse à une demande provenant de l'appareil de réception (3).
